Europäisches Patentamt

European Patent Office

Office européen des brevets

(19)

(11) Publication number: **0 106 300**

**A1**

(12) **EUROPEAN PATENT APPLICATION**

(21) Application number: **83110093.8**

(22) Date of filing: **10.10.83**

(51) Int. Cl.³: **F 16 H 55/46**

(30) Priority: **12.10.82 FI 823464**

(43) Date of publication of application:
**25.04.84 Bulletin 84/17**

(84) Designated Contracting States:
**AT BE CH DE FR GB IT LI LU NL SE**

(71) Applicant: **Mattila, Raimo Antero**
**Ketunpolku 8**
**SF-18150 Heinola 15(FI)**

(72) Inventor: **Mattila, Raimo Antero**
**Ketunpolku 8**
**SF-18150 Heinola 15(FI)**

(74) Representative: **Siebmanns, Hubertus**
**Götalands Patentbyra AB Egnahemsvägen 2**
**S-561 35 Huskvarna(SE)**

(54) **Demountable pulley.**

(57) The invention relates to a demountable pulley. A problem with pulleys, transmission gears etc. is the difficulty of replacing them and the resulting costs. According to the invention, the pulley comprises an axially split transmission sleeve (3) mountable on a shaft as well as an axially split pulley, transmission gear etc. (2A,2B). The split pulley, transmission gear etc. is removably mountable on said transmission sleeve by means of fastening elements (5A,5B) which can be inserted from the outside between the relative surfaces of said transmission sleeve and said pulley, transmission gear etc. for fastening them to each other.

Fig. 1

EP 0 106 300 A1

0106300

# DEVICE FOR MOUNTING A TRANSMISSION GEAR

The present invention relates to a device for mounting a transmission gear on a transmission shaft.

Replacement of a transmission gear requires a lot of work and leads to a long down time of the entire apparatus. A further drawback with halved transmission gears is the complexity of their constructions, manufacturing of their components being expensive and mounting thereof on a shaft requiring special procedures. Thus, the repair costs grow high and the effective service time of an apparatus decreases.

An object of the invention is to provide a device for mounting a transmission gear on a transmission shaft that can be directly installed in place without having to dismount other components of a transmission shaft and that cuts down the repair and down time of an apparatus. Another object of the invention is to provide a device for mounting a transmission gear, said device being simple and inexpensive to manufacture and readily mountable and removable.

The above objects of the invention are accomplished by a device that is mainly characterized by what is set out in the annexed claims.

According to the invention, the device comprises a transmission sleeve mountable on a shaft and an axially halved or split transmission gear that can be removably affixed to said transmission sleeve by using fastening means. The relative surfaces of a transmission sleeve and transmission gear are so designed that said fastening means can be inserted from the outside between these surfaces for fastening them to each other. The fastening means may consist e.g. of so-called cotter wires that are made of a flexible material and easy to handle. A transmission gear is readily mountable and removable by using said fastening means, so that the apparatus can be repaired in a short time.

According to the invention, a transmission sleeve is preferably halved or split in two in a manner that the splitting plane of a transmission sleeve and that of a transmission gear extend crosswise relative to each other. Thus, the fastening means secure a transmission gear and a transmission sleeve effectively to each other. A transmission gear can be preferably positioned so that the splitting plane of a transmission sleeve and that of a transmission gear are perpendicular to each other. The split surfaces are thus as far away from each other as possible and the fastening means secure the elements to each other reliably and effectively.

The invention will now be explained in detail with reference made to the accompanying drawings, in which

Fig. 1 is a side view of a device according to the invention, and

Fig. 2 is a section along the line A-A in Fig. 1.

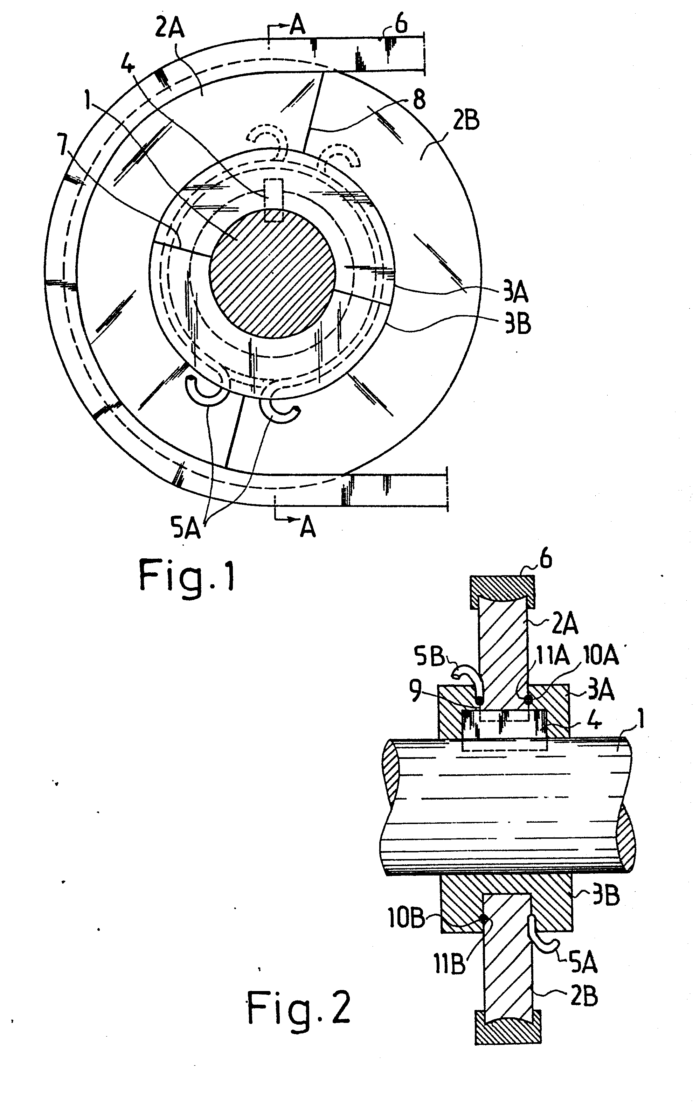

In Figs. 1 and 2, there is shown a transmission shaft 1 which rotates or spins around. A desired part of the transmission shaft is machined to provide a spline for a wedge 4. Machined on the inside of one half 3A of a transmission sleeve 3 is a matching recess for tightly fitting wedge 4 therein. The other half 3B of a transmission sleeve is positioned on the opposite side of transmission shaft 1, said elements 3A and 3B making up a circular transmission sleeve. Said sleeve can be mounted on a shaft also by some other known methods.

Centrally on the outside of transmission sleeve 3A and 3B is made a fitting spline 9 to accommodate one half 2A of a transmission gear in a manner that the splitting plane 7 of sleeve 3 extends crosswise to the splitting plane 8 of a transmission gear 2. In this embodiment, the splitting plane of a transmission sleeve and that of a transmission gear are arranged perpendicularly to each other. The transmission gear half 2A is provided by a spline for a wedge 4. On the opposite side of a transmission sleeve 3 is mounted the other half 2B of a transmission gear, said elements 2A and 2B making up a circular transmission gear.

The insides of the fitting groove for transmission sleeve 3 are provided with semicircular grooves 10A and 10B. These semicircular grooves come out of the inside edge centrally of the transmission sleeve halves twice, while the semicircular groove on the other side forms a semicircle. The semicircular grooves 10A and 10B of transmission sleeve halves 3A and 3B come out of the edge from the opposite insides and on the opposite sides to the periphery of a transmission sleeve.

Correspondingly, the outer edges of transmission gear 2 are provided with semicircular grooves 11A and 11B, whose locations are in alignment with the grooves of transmission sleeve 3. As a result of the perpendicular position of the splitting planes, said semicircular grooves commence and terminate in this embodiment in the direction of the transmission wheel splitting plane.

In assembled condition, the grooves of a transmission gear form circular holes, in which is inserted a flexible cotter wire 5A and on the other side 5B, said wires being fastened e.g. by bending the ends thereof. On the periphery of a thus obtained integral transmission gear can be mounted a transmitter 6 required for power transmission.

It should be appreciated that a transmission sleeve and gear can be mounted directly on an object of application to which the unit is fixed by means of a wedge 4, there being no need for transmission gear support rings. A transmission gear 2 may be any wheel or pulley needed for power transmission.

The invention has been described by studying one examplatory embodiment but also other embodiments and solutions are possible within the scope of the annexed claims.

5

CLAIMS

1. Device for mounting a transmission gear on a transmission shaft (1), c h a r a c t e r i z e d in that said device comprises a transmission sleeve (3) mountable on a shaft as well as an axially split transmission gear (2A, 2B), and that said split transmission gear is removably mountable on said transmission sleeve by means of fastening elements (5A, 5B) that can be inserted from the outside between the relative surfaces of said transmission sleeve and transmission gear for fastening these to each other.

2. Device as set forth in claim 1, c h a r a c t e r i z e d in that the transmission gear is so positioned that the transmission sleeve splitting plane (7) and the transmission gear splitting plane (8) extend crosswise relative to each other.

3. Device as set forth in claim 2, c h a r a c t e r i z e d in that the transmission gear is so positioned that the transmission sleeve splitting plane and the transmission gear splitting plane are perpendicular to each other.

4. Device as set forth in any of claims 1-3, c h a r a c t e r i z e d in that the transmission sleeve is provided with an external fitting groove (9) for fitting said transmission gear therein.

5. Device as set forth in any of claims 1-4, c h a r a c t e r i z e d in that the transmission sleeve is adapted to be fixedly mounted on a transmission shaft at a desired location.

0106300

Fig.1

Fig.2

**European Patent Office**

# EUROPEAN SEARCH REPORT

Application number

| | DOCUMENTS CONSIDERED TO BE RELEVANT | | EP 83110093.8 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| X | US - A - 1 322 055 (ROBERTS)<br>* Totality *<br>-- | 1,2,3,5 | F 16 H 55/46 |
| A | US - A - 1 408 138 (PELL)<br>* Totality *<br>-- | 2,3,5 | |
| A | US - A - 1 485 621 (LOEFFLER)<br>* Totality *<br>-- | 4 | |
| A | WO - A1 - 82/03 110 (ELECTROLUX)<br>* Totality *<br>-- | 4 | |
| A | US - A - 3 159 047 (DABLE)<br>* Totality *<br>-- | | |
| A | US - A - 3 742 779 (SHAVER)<br>* Totality *<br>-- | | TECHNICAL FIELDS SEARCHED (Int. Cl. ³) |
| A | DD - A - 120 693 (VEB KONTAKT-BAUELEMENTE)<br>* Totality *<br>-- | | F 16 D 1/00<br>F 16 H 55/00 |
| A | GB - A - 153 239 (BROWN)<br>* Totality *<br>---- | | |

The present search report has been drawn up for all claims

| Place of search | Date of completion of the search | Examiner |
|---|---|---|
| VIENNA | 30-11-1983 | SCHATEK |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82